# EUROPÄISCHE PATENTSCHRIFT

(11) **EP 2 877 873 B1**
(45) Veröffentlichungstag und Bekanntmachung des Hinweises auf die Patenterteilung: **16.10.2019**
(21) Anmeldenummer: 13741722.6
(22) Anmeldetag: 23.07.2013
(51) Int. Cl.: G01S 7/521, B60R 19/48, G10K 11/02, H04R 7/16, G01S 7/52, G01S 15/87, G01S 15/93, G01S 7/524, G01S 7/54, G01H 3/06

(54) **ULTRASCHALLSENSORANORDNUNG MIT EINEM ULTRASCHALLSENSOR IM KÜHLERGRILL, KRAFTFAHRZEUG UND ENTSPRECHENDES VERFAHREN**
ULTRASONIC SENSOR ARRANGMENT COMPRISING AN ULTRASONIC SENSOR IN THE RADIATOR GRILL, MOTOR VEHICLE AND CORRESPONDING METHOD
ENSEMBLE CAPTEUR À ULTRASONS COMPORTANT UN CAPTEUR À ULTRASONS DANS LA CALANDRE, VÉHICULE À MOTEUR ET PROCÉDÉ CORRESPONDANT

(30) Priorität: 24.07.2012 DE 102012106693
(43) Veröffentlichungstag der Anmeldung: 03.06.2015
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: WEHLING, Hans-Wilhelm, 74074 Heilbronn (DE); WEYLAND, Joerg, 74336 Brackenheim (DE); WEBER, Natalie, 74321 Bietigheim-Bissingen (DE); MAX, Stephan, 38518 Gifhorn (DE)
(74) Vertreter: Hofstetter, Schurack & Partner
(86) Internationale Anmeldenummer: PCT/EP2013/065505
(87) Internationale Veröffentlichungsnummer: WO 2014/016291

(56) Entgegenhaltungen:
- EP-A1- 2 293 102
- DE-A1- 10 314 922
- DE-A1-102005 038 649
- DE-A1-102006 034 997
- DE-A1-102011 016 287

## Beschreibung

Die Erfindung betrifft eine Ultraschallsensoranordnung für ein Kraftfahrzeug, mit einem Verkleidungsteil, insbesondere einem Stoßfänger, mit einem Kühlergrill - insbesondere mit zumindest einer Lamelle -, und mit zumindest einem ersten und einem zweiten Ultraschallsensor jeweils umfassend eine Membran zum Aussenden und/oder Empfangen von Ultraschallsignalen, wobei der erste Ultraschallsensor mit seiner Membran an einer Rückseite des Verkleidungsteils angeordnet ist, insbesondere anliegt, sodass die Membran des ersten Ultraschallsensors die Ultraschallsignale durch das Verkleidungsteil hindurch sendet und/oder empfängt, und der zweite Ultraschallsensor dem Kühlergrill, insbesondere an zumindest einer Lamelle des Kühlergrills, angeordnet ist. Die Erfindung betrifft außerdem ein Kraftfahrzeug mit einer solchen Ultraschallsensoranordnung, wie auch ein Verfahren zum Betreiben von zumindest zwei Ultraschallsensoren eines Kraftfahrzeugs.

Es ist bereits Stand der Technik, ein Kraftfahrzeug mit einer Vielzahl von Ultraschallsensoren auszustatten. Die Ultraschallsensoren sind bekanntlich im Frontbereich sowie im Heckbereich des Fahrzeugs verbaut, nämlich insbesondere an den jeweiligen Stoßfängern. Sie sind Fahrerassistenzeinrichtungen zugeordnet und liefern Informationen über die Fahrzeugumgebung. Fahrerassistenzeinrichtungen können beispielsweise Parkassistenzsysteme, Systeme zur Totwinkelüberwachung, Systeme zur Abstandshaltung, Spurüberwachungssysteme, Bremsassistenzsysteme und dergleichen sein.

Ultraschallsensoren besitzen bekanntlich eine topfförmige Membran, welche zum Aussenden sowie zum Empfangen von Ultraschallwellen dient. Die Membran wird mithilfe eines piezoelektrischen Elements zur mechanischen Schwingung angeregt; im Empfangsfall wird an dem piezoelektrischen Element eine elektrische Spannung abgegriffen, anhand welcher ein Abstand zum Hindernis berechnet wird.

Es ist bereits bekannt, dass derartige Ultraschallsensoren in Stoßfängern unverdeckt verbaut werden. Dies bedeutet, dass sie in durchgängigen Aussparungen in den Stoßfängern angeordnet werden und außenseitig sichtbar sind. Bei derartig angeordneten Ultraschallsensoren wird die Senderichtcharakteristik horizontal und vertikal durch die Innengeometrie des Aluminiumtopfes (Membran) des Ultraschallsensors erzeugt. Weil bei den sichtbar verbauten Sensoren kein Hindernis die Schallausbreitung stört, ist die Funktion des Wandlers, Hindernisse beispielsweise beim Einparken des Fahrzeugs zu erkennen, nicht beeinträchtigt.

Die Anordnung der Ultraschallsensoren in den durchgängigen Aussparungen im Stoßfänger ist für die nicht verdeckten Wandler trotz der großen Toleranzen ausreichend. Es wird beispielsweise der Ultraschallsensor mithilfe eines Halters befestigt, welcher an den Stoßfänger angedrückt und geklebt wird.

Darüber hinaus sind aus dem Stand der Technik auch verdeckt verbaute Ultraschallsensoren bekannt. Diese sind somit bei einer Betrachtung des Stoßfängers von außen nicht sichtbar und durch den Stoßfänger abgedeckt. Hier wird die Membran des Ultraschallsensors in Anlage mit der Rückseite des Stoßfängers gebracht, wobei die Ultraschallsignale durch den Stoßfänger hindurch gesendet bzw. empfangen werden. Der Wandler muss also hinter dem Stoßfänger mechanisch fest angebracht werden, ohne dass hierzu der Stoßfänger mit einer Aussparung versehen werden kann. Die beiden Oberflächen - nämlich die des Ultraschallsensors einerseits und die des Stoßfängers andererseits - müssen nun spielfrei zusammenpassen und können außerdem eben oder aber gebogen bzw. gekrümmt sein. Der Ultraschallsensor soll dabei verlustfrei durch den Stoßfänger senden können. Bei verdeckt hinter dem Stoßfänger verbauten Sensoren sind also grundsätzlich wesentlich höhere Anforderungen an die Positionierung, die Klebung und die einzuhaltenden Toleranzen gegeben. Um die Sende- und Empfangsverluste gering zu halten, muss die Sendefläche des Ultraschallsensors mechanisch fest mit dem Stoßfänger verbunden werden oder mit einem verlustfreien Koppelelement zwischen der Sendefläche bzw. der Frontfläche der Membran einerseits und dem Stoßfänger andererseits ausgebildet werden.

Aus der DE 10 2011 016 287 A1 ist ein Verfahren und eine Vorrichtung zum Regeln eines Ultraschallsensors eines Kraftfahrzeugs bekannt. Es wird dort ein Ultraschallsensor an einem Bauteil des Kraftfahrzeugs, insbesondere einem Stoßfänger verbaut und die Betriebsfrequenz dieses Ultraschallsensors für sich betrachtet an diesen Einbauort angepasst.

Aus der DE 10 2005 038 649 A1 ist ein Verfahren und ein System zum Betreiben eines Ultraschallwandlers bekannt. Darüber hinaus ist aus der DE 10 2006 034 997 A1 eine Ultraschallgegenstandserfassungsvorrichtung bekannt. Des Weiteren ist aus der EP 2 293 102 A1 ein Verfahren und eine Vorrichtung zur Bestimmung der Position eines Hindernisses relativ zu einem Fahrzeug bekannt, wobei dazu Ultraschallsensoren eingesetzt werden.

Darüber hinaus ist aus der DE 103 14 922 A1 ein mit Ultraschall arbeitendes Füllstandsmessgerät bekannt.

Eine verdeckte Anordnung eines Ultraschallsensors ist beispielsweise aus der Druckschrift DE 42 38 924 A1 bekannt.

Nun richtet sich das Interesse auf eine Kombination aus einem ersten Ultraschallsensor, welcher hinter einem Verkleidungsteil (insbesondere Stoßfänger) verdeckt bzw. versteckt angeordnet ist, sowie einem zweiten Ultraschallsensor, welcher an einem Kühlergrill des Kraftfahrzeugs angebracht ist, also an zumindest einer Lamelle des Kühlergrills. Eine solche Kombination aus zumindest zwei unterschiedlich verbauten Ultraschallsensoren erweist sich bei manchen Systemen als erforderlich, und zwar aufgrund der verdeckten Anordnung des ersten Ultraschallsensors hinter dem Stoßfänger. Es wird dabei angestrebt, gleiche Ultraschallsensoren zu verwenden, um die Anzahl der benötigten Sensorarten zu minimieren. Dies bedeutet, dass der im Kühlergrill verbaute Ultraschallsensor in seiner Bauweise - und somit auch in seiner Resonanzfrequenz im unverbauten Zustand - gleich dem Ultraschallsensor hinter dem Stoßfänger ist. Eine solche identische Ausgestaltung der beiden Ultraschallsensoren führt jedoch dazu, dass die beiden Ultraschallsensoren aufgrund der unterschiedlichen Anordnungen insgesamt auch unterschiedliche Abstrahlcharakteristika aufweisen und außerdem die Frequenzen der beiderseitigen Signale unterschiedlich sind. Dies wiederum führt dazu, dass eine Kreuzmessung mithilfe der beiden Ultraschallsensoren nicht möglich ist, weil der eine Ultraschallsensor die Signale des anderen Sensors nicht empfangen kann. Außerdem wird somit auch die Auswertung der Signale aufwändiger. All dies beruht darauf, dass das Sendeverhalten des hinter dem Stoßfänger verbauten Ultraschallsensors maßgeblich von dem Stoßfängermaterial beeinflusst wird, während der andere Ultraschallsensor "freie Sicht" hat.

Es ist Aufgabe der Erfindung, eine Lösung aufzuzeigen, wie bei einer Ultraschallsensoranordnung der eingangs genannten Gattung zwei gleiche Ultraschallsensoren eingesetzt werden können und dennoch eine Kreuzmessung ermöglicht werden kann, bei welcher der eine Sensor die Ultraschallsignale des anderen Sensors empfangen kann.

Diese Aufgabe wird erfindungsgemäß durch eine Ultraschallsensoranordnung, durch ein Kraftfahrzeug, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Ultraschallsensoranordnung für ein Kraftfahrzeug umfasst ein Verkleidungsteil, insbesondere einen Stoßfänger, sowie einen Kühlergrill - insbesondere mit zumindest einer Lamelle -, wie auch zumindest einen ersten und einen zweiten Ultraschallsensor, welche jeweils eine Membran aufweisen, welche zum Aussenden und/oder Empfangen von Ultraschallsignalen ausgebildet ist. Der erste Ultraschallsensor ist mit seiner Membran an einer Rückseite des Verkleidungsteils angeordnet, und liegt insbesondere an der Rückseite an. Die Membran des ersten Ultraschallsensors sendet und/oder empfängt die Ultraschallsignale somit durch das Verkleidungsteil hindurch. Demgegenüber ist der zweite Ultraschallsensor an dem Kühlergrill angeordnet, nämlich insbesondere an zumindest einer Lamelle des Kühlergrills. Erfindungsgemäß sind Verstimmmittel bereitgestellt, welche zum Verstimmen des zweiten Ultraschallsensors und somit zum Anpassen eines Sende- und/oder Empfangsverhaltens des zweiten Ultraschallsensors an das Sende- und/oder Empfangsverhalten des ersten Ultraschallsensors ausgebildet sind.

Die Erfindung basiert auf mehreren Erkenntnissen: Sie beruht zunächst auf der Erkenntnis, dass es bei hinter dem Stoßfänger bzw. einem anderen Verkleidungsteil verdeckt angeordneten Ultraschallsensoren bei manchen Systemen auch erforderlich ist, zumindest einen Ultraschallsensor in dem Kühlergrill zu positionieren. Die Erfindung basiert weiterhin auf der Erkenntnis, dass bei gleichen Ultraschallsensoren ein Nachteil im Stand der Technik darin besteht, dass das Verkleidungsteil die Sendefrequenz und auch die Abstrahlcharakteristik des ersten Ultraschallsensors beeinflusst, sodass nicht nur die Membran dieses Sensors, sondern auch ein Bereich des Verkleidungsteils mitschwingt und die tatsächliche Sendefrequenz somit unterschiedlich von der eigentlichen Resonanzfrequenz des Ultraschallsensors im unverbauten Zustand ist, während der zweite Ultraschallsensor "freie Sicht" hat und seine Sendefrequenz somit grundsätzlich der Resonanzfrequenz der Membran entspricht. Die Erfindung baut ferner auf der Erkenntnis auf, dass es durch den genannten Nachteil im Stand der Technik auch nicht möglich ist, eine Kreuzmessung (indirekte Messung) mit den beiden Ultraschallsensoren durchzuführen, weil der eine Ultraschallsensor die Signale des anderen Ultraschallsensors nicht empfangen kann. Die Erfindung geht nun den Weg, den im Kühlergrill angeordneten Ultraschallsensor in seiner Sendefrequenz so zu verstimmen bzw. derartig zu beeinflussen, dass seine Sende- und/oder Empfangscharakteristik bzw. sein Verhalten dem Verhalten des hinter dem Verkleidungsteil angeordneten Ultraschallsensors entspricht. Dies hat den Vorteil, dass gleiche Sensoren verwendet werden können und somit die Anzahl der benötigten Sensorarten auf ein Minimum reduziert ist und trotz der unterschiedlichen Anordnung der Ultraschallsensoren auch Kreuzmessungen möglich sind, bei denen der eine Ultraschallsensor Ultraschallsignale aussendet, während der andere Ultraschallsensor selbige Signale empfängt.

Unter einem Kühlergrill wird vorliegend ein Bauteil, insbesondere ein Gitter, verstanden, welches vor dem Kühler im Frontbereich des Kraftfahrzeugs angeordnet ist. Neben der Funktion des Kühllufteinlasses weist der Kühlergrill in der Regel auch die Funktion der Fahrzeuggestaltung auf und erhöht somit durch das oft sehr charakteristische Design den Wiedererkennungswert einer Automobilmarke. Der Kühlergrill ist auch unter den Begriffen "Lufteinlassschlitze", "Kühlergrill als Markentypisches Designelement", "Kühlergitter", "Kunststoffrippen" sowie "Kunststoffblende" bekannt.

Also wird das Sende- und/oder Empfangsverhalten des zweiten Ultraschallsensors an das Verhalten des ersten Ultraschallsensors angepasst. Dies bedeutet insbesondere, dass der zweite Ultraschallsensor so beeinflusst wird, dass seine Abstrahlcharakteristik und/oder Sendefrequenz an den ersten Ultraschallsensor angepasst werden.

Es ist vorgesehen, dass der erste und der zweite Ultraschallsensor Sensoren gleicher Bauweise bzw. identische Sensoren mit im unverbauten Zustand gleichen Resonanzfrequenzen sind. Somit ist die Anzahl der benötigten Sensortypen minimal.

Es wird mithilfe der Verstimmmittel eine Frequenz der von dem zweiten Ultraschallsensor ausgesendeten Ultraschallsignale an die Frequenz der von dem ersten Ultraschallsensor ausgesendeten Ultraschallsignale angepasst. Somit weisen die beiderseitigen Ultraschallsignale gleiche Frequenzen auf, sodass die beiden Membranen mit der gleichen Frequenz schwingen. Somit sind Kreuzmessungen mit den beiden Ultraschallsensoren möglich.

Hinsichtlich der Ausgestaltung der Verstimmmittel können grundsätzlich zwei unterschiedliche Ausführungsformen vorgesehen sein, welche gegebenenfalls auch miteinander kombiniert werden können: Zum einen kann das Sende- und/oder Empfangsverhalten des zweiten Ultraschallsensors mithilfe eines scheibenartigen Verstimmelements beeinflusst werden, welches an einer Frontfläche der Membran angebracht wird. Ergänzend oder alternativ kann die Verstimmung des zweiten Ultraschallsensors auch elektronisch erfolgen.

In einer Ausführungsform ist demnach vorgesehen, dass die Verstimmmittel ein scheibenartiges Verstimmelement aufweisen, welches zum Verstimmen des zweiten Ultraschallsensors an einer Frontfläche der Membran des zweiten Ultraschallsensors anliegend angeordnet ist. Ein derartiges plattenartiges bzw. scheibenförmiges Verstimmelement beeinflusst dann die Resonanzfrequenz der Membran und schwingt somit auch zusammen mit der Membran. Auf diesem Wege gelingt es, das Verhalten des zweiten Ultraschallsensors ohne viel Aufwand zu beeinflussen und an das Verhalten des ersten Ultraschallsensors anzupassen.

Vorzugsweise ist das Verstimmelement mit der Frontfläche der Membran verklebt. Somit ist eine zuverlässige und rutschfeste sowie betriebssichere Ankopplung des Verstimmelements an die Membran des zweiten Ultraschallsensors gewährleistet. Außerdem ist somit die Verbindung zwischen dem Verstimmelement und der Membran auf die gleiche Art und Weise bereitgestellt, wie dies zwischen dem anderen Ultraschallsensor und dem Verkleidungsteil der Fall ist.

Bevorzugt ist das Verstimmelement aus Kunststoff gebildet. Diese Ausführungsform macht sich die Tatsache zunutze, dass auch Verkleidungsteile des Kraftfahrzeugs bekanntlich aus Kunststoff gebildet sein können. Diese Ausführungsform ermöglicht es somit, dem Verstimmelement die schwingungstechnischen Eigenschaften des Verkleidungsteils zu verleihen, sodass der zweite Ultraschallsensor durch das Verstimmelement im gleichen Ausmaß wie der erste Ultraschallsensor durch das Verkleidungsteil beeinflusst werden kann.

Besonders bevorzugt ist es daher, wenn das Verstimmelement aus dem gleichen Material wie das Verkleidungsteil gebildet ist. Somit gelingt es, den zweiten Ultraschallsensor durch das Verstimmelement in der gleichen Weise zu beeinflussen, wie auch der erste Ultraschallsensor durch das Verstimmelement beeinflusst wird. Es ergeben sich somit insgesamt gleiche Abstrahlcharakteristika sowie auch gleiche Sendefrequenzen, was einerseits die Durchführung der Kreuzmessungen ermöglicht und andererseits auch die elektronische Auswertung der beiderseitigen Signale vereinfacht. Die Wahl des gleichen Materials für das Verstimmelement hat insbesondere auch den Vorteil, dass sich die schwingungstechnischen Eigenschaften des Verstimmelements somit in gleicher Weise abhängig von der Umgebungstemperatur wie die Eigenschaften des Verkleidungsteils verändern. So verändert sich insbesondere das E-Modul des Verstimmelements in gleicher Weise wie das E-Modul des Verkleidungsteils. Somit bleibt das Sende- und/oder Empfangsverhalten des zweiten Ultraschallsensors stets gleich dem Verhalten des ersten Ultraschallsensors, und zwar unabhängig von der aktuellen Temperatur.

Ergänzend oder alternativ kann auch vorgesehen sein, dass das Verstimmelement gleiche Dicke wie das Verkleidungsteil in demjenigen Bereich aufweist, an welchem die Membran des ersten Ultraschallsensors angeordnet ist. Auch somit können die Eigenschaften der beiden Ultraschallsensoren aneinander angeglichen werden.

In einer Ausführungsform ist vorgesehen, dass die Ultraschallsensoranordnung ein - vorzugsweise aus Keramik gebildetes - ringförmiges Versteifungselement aufweist, welches um die topfförmige Membran des zweiten Ultraschallsensors herum angeordnet ist. Das Verstimmelement kann hier sowohl an der Frontfläche der Membran des zweiten Ultraschallsensors als auch an einer Stirnseite des Versteifungselements anliegend angeordnet sein. Ein derartiges Versteifungselement hat den Vorteil, dass somit die Schwingung der Membran bzw. der gesamten Anordnung aus Membran und Verstimmelement so weit reduziert werden kann, dass die Ausschwingszeit der Membran ein vorgegebenes Messfenster nicht überschreitet. Mithilfe eines solchen Versteifungselements kann somit die Zeitdauer der Schwingung der gesamten Anordnung aus Membran und Verstimmelement auf eine noch akzeptable Zeit reduziert werden. Das Versteifungselement kann dabei kleiner als ein solches Versteifungselement des ersten Ultraschallsensors sein, welcher hinter dem Verkleidungsteil platziert ist. Durch eine solche kleinere Ausgestaltung dieses Versteifungselements wird erreicht, dass der Ultraschallsensor im Kühlergrill nicht auffällt.

Wie bereits ausgeführt, kann die Verstimmung des zweiten Ultraschallsensors auch elektronisch erfolgen. Zu diesem Zwecke können die Verstimmmittel eine elektronische Steuereinrichtung aufweisen, welche zum Verstimmen des zweiten Ultraschallsensors selbigen Sensor bei einer Anregungsfrequenz betreibt, welche unterschiedlich von der Resonanzfrequenz des Ultraschallsensors bzw. unterschiedlich von der Eigenfrequenz der Membran ist. Auch somit kann eine zuverlässige und gute Anpassung des Sendeverhaltens des zweiten Ultraschallsensors an das Sendeverhalten des ersten Ultraschallsensors erfolgen. Dabei kann sogar vorgesehen sein, dass ausschließlich eine solche elektronische Verstimmung des zweiten Ultraschallsensors vorgenommen wird, ohne dass ein mechanisches Verstimmelement eingesetzt werden muss. Alternativ wird jedoch die Ausführungsform bevorzugt, bei welcher teilweise eine elektronische Verstimmung durchgeführt wird und zusätzlich auch der zweite Ultraschallsensor mithilfe eines Verstimmelements teilweise verstimmt wird. Hierbei können exemplarisch 50% der Verstimmung durch ein zusätzliches Verstimmelement und ebenfalls 50% durch eine Verschiebung der Anregungsfrequenz des zweiten Ultraschallsensors erreicht werden.

Die elektronische Verstimmung erfolgt also dadurch, dass der Ultraschallsensor nicht bei seiner Resonanzfrequenz bzw. Eigenfrequenz, sondern bei einer davon unterschiedlichen Frequenz angeregt wird. Weil diese Anregungsfrequenz somit unterschiedlich von der tatsächlichen Resonanzfrequenz des zweiten Ultraschallsensors ist, wird die Membran auch nicht ideal angeregt, und die Sende- bzw. Empfangsleistung wird reduziert. Diese Ausführungsform beruht auf folgender Überlegung: Der hinter dem Verkleidungsteil verbaute, unsichtbare erste Ultraschallsensor besitzt unter Umständen (hohe Dämpfung aufgrund des Verkleidungsteils mit seinem hohen E-Modul) eine deutlich höhere Dämpfung gegenüber dem zweiten Ultraschallsensor, welcher "eine freie Sicht" hat. Dies bedeutet, dass eine deutlich höhere Leistung durch den zweiten Ultraschallsensor ausgesendet werden kann und die Empfindlichkeit dieses Sensors auch vergleichsweise deutlich höher ist. Mit anderen Worten besitzt der zweite Ultraschallsensor auch eine deutliche Leistungsreserve. Wird dieser zweite Ultraschallsensor nun bei einer Anregungsfrequenz betrieben, welche unterschiedlich von der Resonanzfrequenz ist, so kann das Sendesignal dieses Sensors an die Signale des ersten Ultraschallsensors angeglichen werden, ohne dass der zweite Ultraschallsensor in seiner Funktionsweise beeinträchtigt wird.

Die Steuereinrichtung kann die Anregungsfrequenz des zweiten Ultraschallsensors auf einen Wert einstellen, bei welchem die Frequenz der von diesem Ultraschallsensor ausgesendeten Ultraschallsignale gleich der Frequenz der Ultraschallsignale des ersten Ultraschallsensors ist.

Die Erfindung betrifft außerdem ein Kraftfahrzeug mit einer erfindungsgemäßen Ultraschallsensoranordnung.

Ein erfindungsgemäßes Verfahren dient zum Betreiben von zumindest zwei Ultraschallsensoren eines Kraftfahrzeugs, bei welchem ein erster Ultraschallsensor mit seiner Membran an einer Rückseite eines Verkleidungsteils, insbesondere eines Stoßfängers, des Kraftfahrzeugs angeordnet ist, sodass die Membran des ersten Ultraschallsensors Ultraschallsignale durch das Verkleidungsteil hindurch sendet und/oder empfängt, und der zweite Ultraschallsensor an einem Kühlergrill des Kraftfahrzeugs angeordnet ist. Mittels Verstimmmitteln wird der zweite Ultraschallsensor verstimmt und hierdurch sein Sende- und/oder Empfangsverhalten an das Sende- und/oder Empfangsverhalten des ersten Ultraschallsensors angepasst.

Die mit Bezug auf die erfindungsgemäße Ultraschallsensoranordnung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Dabei zeigen:
- Fig. 1: in schematischer Darstellung ein Kraftfahrzeug gemäß einer Ausführungsform der Erfindung;
- Fig. 2: in schematischer Darstellung eine Schnittansicht durch eine Ultraschallsensoranordnung gemäß einer ersten Ausführungsform der Erfindung;
- Fig. 3a bis 3f: in schematischer Darstellung unterschiedliche Formen eines Verstimmelements; und
- Fig. 4: in schematischer Darstellung eine Schnittansicht durch eine Anordnung gemäß einer zweiten Ausführungsform der Erfindung.

In den Figuren werden gleiche oder funktionsgleiche Elemente mit den gleichen Bezugszeichen versehen.

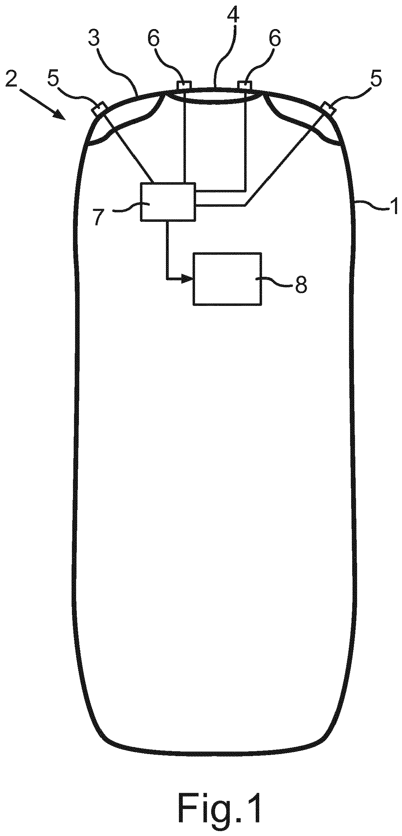

Ein in Fig. 1 schematisch dargestelltes Kraftfahrzeug 1 ist im Ausführungsbeispiel ein Personenkraftwagen. Das Kraftfahrzeug 1 umfasst eine Ultraschallsensorvorrichtung bzw. eine Ultraschallsensoranordnung 2, welche einen vorderen Stoßfänger 3 als Verkleidungsteil, einen Kühlergrill 4 sowie im Ausführungsbeispiel vier Ultraschallsensoren aufweist, nämlich zwei erste Ultraschallsensoren 5 sowie zwei zweite Ultraschallsensoren 6. Die ersten Ultraschallsensoren 5 sind hinter dem Stoßfänger 3 versteckt bzw. verdeckt angeordnet, sodass die Membranen der Ultraschallsensoren 5 an der Rückseite des Stoßfängers 3 anliegen und Ultraschallsignale durch den ungelochten Stoßfänger 3 hindurch gesendet bzw. empfangen werden. Die ersten Ultraschallsensoren 5 sind hier seitliche bzw. äußere Sensoren, während sich die zweiten Ultraschallsensoren 6 mittig zwischen den beiden äußeren ersten Ultraschallsensoren 5 befinden.

Die zweiten Ultraschallsensoren 6 sind hingegen in dem Kühlergrill 4 angeordnet, nämlich jeweils an zumindest einer Lamelle.

Die Anzahl der Ultraschallsensoren 5, 6 ist in Fig. 1 lediglich beispielhaft dargestellt und kann je nach Ausführungsform unterschiedlich sein. So kann in dem Kühlergrill 4 lediglich ein einziger zweiter Ultraschallsensor 6 vorgesehen sein; alternativ können auch drei solche Sensoren vorgesehen sein. Auch die Anzahl der ersten Ultraschallsensoren 5 ist lediglich exemplarisch.

Alle Ultraschallsensoren 5, 6 sind mit einer elektronischen Steuereinrichtung 7 elektrisch gekoppelt, welche anhand der Empfangssignale der Ultraschallsensoren 5, 6 die Abstände zu Hindernissen berechnet. Die Steuereinrichtung 7, welche beispielsweise als Mikrocontroller ausgebildet ist, steuert dann beispielsweise eine Ausgabeeinrichtung 8 an, über welche die gemessenen Abstände ausgegeben werden. Die Ausgabeeinrichtung 8 kann beispielsweise ein Lautsprecher und/oder ein optisches Display sein.

Alle Ultraschallsensoren 5, 6 sind im Ausführungsbeispiel gleiche bzw. identische Sensoren und besitzen somit auch gleiche Eigenfrequenzen bzw. Resonanzfrequenzen im unverbauten Zustand. Allerdings wird die Sendefrequenz der ersten Ultraschallsensoren 5 aufgrund der Anordnung an dem Stoßfänger 3 durch das Material des Stoßfängers 3 verändert. Es werden insgesamt auch die Abstrahlcharakteristika dieser Ultraschallsensoren 5 durch den Stoßfänger 3 verändert. Auch ändern sich diese Eigenschaften über der Temperatur, weil sich die schwingungstechnischen Eigenschaften des Stoßfängers 3, insbesondere sein E-Modul, mit der Temperatur verändern. Demgegenüber haben die zweiten Ultraschallsensoren 6 grundsätzlich "freie Sicht" und werden durch den Stoßfänger 3 nicht beeinflusst. Bei einer solchen Konstellation sind Kreuzmessungen zwischen den ersten Ultraschallsensoren 5 einerseits und den zweiten Ultraschallsensoren 6 andererseits und somit die genaue Bestimmung der Position eines Hindernisses nicht möglich, weil die ersten Ultraschallsensoren 5 Ultraschallsignale mit einer solchen Frequenz aussenden, welche bei den Ultraschallsensoren 6 nicht erwartet wird bzw. welche durch diese zweiten Ultraschallsensoren 6 nicht empfangen werden kann. Deshalb werden im Ausführungsbeispiel Maßnahmen getroffen, die gewährleisten, dass die zweiten Ultraschallsensoren 6 in ihren Sende- und Empfangseigenschaften an die ersten Ultraschallsensoren 5 angeglichen werden. Zu diesem Zwecke werden Verstimmmittel bereitgestellt, welche die Sendefrequenz - also die Frequenz der ausgesendeten Ultraschallsignale - der zweiten Ultraschallsensoren 6 an die Sendefrequenz der ersten Ultraschallsensoren 5 anpassen.

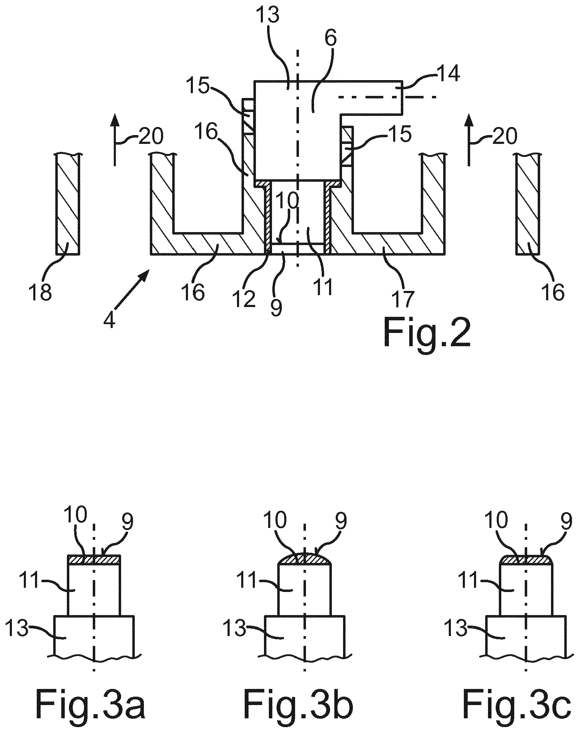

Bezug nehmend nun auf Fig. 2 können die genannten Verstimmmittel in einer Ausführungsform ein Verstimmelement 9 aufweisen, welches ein scheibenartiges und plattenartiges Element ist und an einer Frontfläche 10 einer Membran 11 des zweiten Ultraschallsensors 6 (gilt auch für alle zweiten Ultraschallsensoren 6, die am Kühlergrill 4 angeordnet sind) angeordnet wird, nämlich insbesondere verklebt wird. Das Verstimmelement 9 ist also in Anlage mit der Frontfläche 10 der Membran 11 gebracht, durch welche die Ultraschallsignale ausgesendet werden. Die Membran 11 ist ein Aluminiumtopf, um welchen herum ein Entkopplungsring 12 aus einem weich-elastischen Material angeordnet ist. Die Membran 11 ragt dabei aus einem Gehäuse 13 des Ultraschallsensors 6 heraus, welches einen Stecker 14 zum Anschließen des Ultraschallsensors 6 an die Steuereinrichtung 7 aufweist. Das Gehäuse 13 ist dabei über Rastelemente 15 zwischen zwei Lamellen 16, 17 oder alternativ in einer Aussparung einer einzigen Lamelle eingerastet, wobei die Rastelemente 15 in korrespondierende bzw. komplementäre Rastöffnungen in den Lamellen 16, 17 eingerastet sind. Die Frontfläche 10 der Membran 11 weist dabei in Fahrtrichtung nach vorne. Neben den genannten Lamellen 16, 17 sind außerdem weitere Lamellen 18, 19 bereitgestellt, sodass zwischen den Lamellen 18 und 16 sowie 17 und 19 Luft zur Kühlung eines Motors des Kraftfahrzeugs 1 hindurch strömen kann, wie dies in Fig. 2 mit Pfeilen 20 schematisch dargestellt ist.

Das Verstimmelement 9 ist an der stirnseitigen Frontfläche 10 der Membran 11 mithilfe einer Klebeverbindung befestigt. Das Verstimmelement 9 ist außerdem aus dem gleichen Material wie der Stoßfänger 3 gebildet und weist außerdem die gleiche Dicke wie der Stoßfänger 3 im Bereich der ersten Ultraschallsensoren 5 auf. Diese Dicke beträgt im Ausführungsbeispiel 3 mm.

Durch ein solches Verstimmelement 9 werden bei dem zweiten Ultraschallsensor 6 gleiche Sende- und Empfangsverhältnisse wie bei den ersten Ultraschallsensoren 5 geschaffen, sodass die beiderseitigen Ultraschallsignale auch mit der gleichen Frequenz ausgesendet werden, und zwar unabhängig von der herrschenden Temperatur. Ändern sich die Eigenschaften des Stoßfängers 3, so ändern sich auch die Eigenschaften des Verstimmelements 9. Der Stoßfänger 3 sowie das Verstimmelement 9 können dabei aus Kunststoff gebildet sein.

Mit dem Verstimmelement 9 wird also der zweite Ultraschallsensor 6 so beeinflusst, dass er gleiches Sende- und Empfangsverhalten wie die ersten Ultraschallsensoren 5 aufweist. Dies bedeutet, dass die Sendefrequenz dieses Sensors 6 an die Sendefrequenz der ersten Sensoren 5 angepasst ist bzw. dieser Sendefrequenz entspricht.

Im Ausführungsbeispiel gemäß Fig. 2 befindet sich das Verstimmelement 9 lediglich in Kontakt mit der Frontfläche 10 der Membran 11. Dabei ist die Fläche des Verstimmelements 9 kleiner oder maximal gleich der Frontfläche 10 der Membran 11. Verschiedenste geometrische Formen des Verstimmelements 9 sind dabei in den Fig. 3a bis 3f näher dargestellt. Wie in Fig. 3a gezeigt ist, kann das Verstimmelement 9 eine runde Scheibe sein, welche im Querschnitt rechteckig ausgebildet ist. Der Durchmesser dieses Verstimmelements 9 kann dabei dem Durchmesser der Membran 11 entsprechen. Bei der Ausgestaltung gemäß Fig. 3b ist das Verstimmelement 9 in Form eines runden Gewölbes bzw. bauchartig ausgebildet, wobei die äußere Oberfläche des Verstimmelements 9 einen kleinen Bereich der Oberfläche einer Kugel darstellt. Das Verstimmelement 9 gemäß Fig. 3c entspricht im Wesentlichen dem gemäß Fig. 3a und weist zusätzlich noch abgerundete Ecken auf.

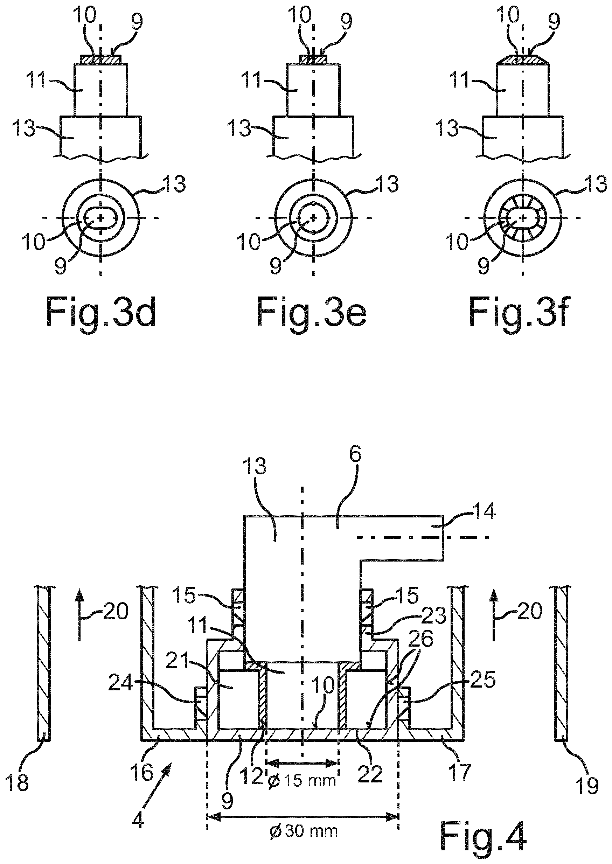

Weitere mögliche Ausgestaltungen des Verstimmelements 9 sind in den Fig. 3d bis 3f gezeigt, wobei unterhalb der jeweiligen Seitenansichten auch Draufsichten auf das Verstimmelement 9 und die Frontfläche 10 der Membran 11 dargestellt sind. In den Fig. 3d und 3e ist das Verstimmelement 9 kleiner als die Frontfläche 10 der Membran 11 ausgebildet. Während in Fig. 3e das Verstimmelement 9 kreisförmig mit einem geringeren Durchmesser als die Membran 11 ausgebildet ist, ist das Verstimmelement 9 gemäß Fig. 3d oval ausgeführt, wie dies insbesondere anhand der Draufsicht zu erkennen ist. Das Verstimmelement 9 gemäß Fig. 3f ist oval und weist außerdem einen abgefassten Randbereich auf.

Abhängig von dem Material des Stoßfängers 3 bzw. des Verstimmelements 9 oder aber abhängig von den schwingungstechnischen Anforderungen oder abhängig von den optischen Anforderungen kann es bei manchen Ausführungsformen auch erforderlich sein, die Ausschwingzeit der Membran 11 zu reduzieren. Aus diesem Grund wird im Ausführungsbeispiel gemäß Fig. 4 ein aus Keramik gebildetes und ringförmiges Versteifungselement 21 eingesetzt, welches um den Entkopplungsring 12 und somit um die Membran 11 herum angeordnet ist. Dieses Versteifungselement 21 reduziert somit die Schwingung der Membran 11 derart, dass die Ausschwingzeit der Membran 11 auf einen geeigneten Wert reduziert ist. Auch bei dieser Ausführungsform liegt das Verstimmelement 9 an der Frontfläche 10 der Membran 11 an, wobei sich dieses Verstimmelement 9 im Unterschied zur Ausführungsform gemäß Fig. 2 auch über eine gesamte frontseitige Stirnseite 22 des Versteifungselements 21 erstreckt. Außerdem ist das Verstimmelement 9 nun einstückig mit einem Halter 23 ausgebildet, in welchem einerseits das Versteifungselement 21 angeordnet ist und andererseits auch das Gehäuse 13 des Ultraschallsensors 6 eingerastet ist, nämlich über die Rastelemente 15. Dieser einstückig ausgebildete Halter 23 ist nun zwischen die Lamellen 16 und 17 eingerastet, und zwar über Rastelemente 24 und 25. Auch hier ist das Verstimmelement 9, welches nun einen Boden des Halters 23 darstellt, aus demselben Material wie der Stoßfänger 3 gebildet und weist die gleiche Dicke auf. Auch der gesamte Halter 23 kann aus diesem Material gebildet sein. Das Versteifungselement 21 ist des Weiteren mit dem Halter 23 über eine Klebeverbindung 26 verbunden.

Der Halter 23 kann an den Kühlergrill 4 angespritzt werden oder aber als separate Komponente ausgebildet sein.

In den Fig. 2 und 4 wurde gezeigt, wie das Sende- und Empfangsverhalten der zweiten Ultraschallsensoren 6 an das Sende- und Empfangsverhalten der ersten Ultraschallsensoren 5 angepasst werden kann. Ergänzend oder alternativ kann auch vorgesehen sein, dass die elektronische Steuereinrichtung 7 selbst die Funktion der Verstimmung der zweiten Ultraschallsensoren 6 übernimmt. Dies kann beispielsweise so aussehen, dass diese zweiten Ultraschallsensoren 6 bei einer Anregungsfrequenz betrieben werden, welche unterschiedlich von der Resonanzfrequenz ist. Diese Ausführungsform kann beispielsweise auch zu einer partiellen Verstimmung der zweiten Ultraschallsensoren 6 verwendet werden, während eine weitere Verstimmung mithilfe des Verstimmelements 9 durchgeführt wird. Im Ergebnis soll die vollständige Verstimmung dazu führen, dass die Frequenz der ausgesendeten Ultraschallsignale der zweiten Ultraschallsensoren 6 gleich der Frequenz der Ultraschallsignale der ersten Ultraschallsensoren 5 ist.

## Patentansprüche

1. Ultraschallsensoranordnung (2) für ein Kraftfahrzeug (1), mit einem Verkleidungsteil (3), insbesondere einem Stoßfänger, mit einem Kühlergrill (4), und mit zumindest einem ersten und einem zweiten Ultraschallsensor (5, 6) jeweils umfassend eine Membran (11) zum Aussenden und/oder Empfangen von Ultraschallsignalen, wobei der erste Ultraschallsensor (5) mit seiner Membran (11) an einer Rückseite des Verkleidungsteils (3) angeordnet ist, sodass die Membran (11) des ersten Ultraschallsensors (5) zum Senden und/oder Empfangen der Ultraschallsignale durch das Verkleidungsteil (3) hindurch ausgebildet ist, und der zweite Ultraschallsensor (6) an dem Kühlergrill (4) angeordnet ist,
**gekennzeichnet durch**
Verstimmmittel (7, 9) zum Verstimmen des zweiten Ultraschallsensors (6) und hierdurch zum Anpassen eines Sende- und/oder Empfangsverhaltens des zweiten Ultraschallsensors (6) an das Sende- und/oder Empfangsverhalten des ersten Ultraschallsensors (5), wobei der erste und der zweite Ultraschallsensor (5, 6) Sensoren gleicher Bauweise mit in unverbautem Zustand gleichen Resonanzfrequenzen sind, und durch die Verstimmmittel (7, 9) eine Frequenz der von dem zweiten Ultraschallsensor (6) ausgesendeten Ultraschallsignale an die Frequenz der von dem ersten Ultraschallsensor (5) ausgesendeten Ultraschallsignale angepasst ist.

2. Ultraschallsensoranordnung (2) nach Anspruch 1,
**dadurch gekennzeichnet, dass**
die Verstimmmittel (7, 9) ein scheibenartiges Verstimmelement (9) aufweisen, welches zum Verstimmen des zweiten Ultraschallsensors (5, 6) an einer Frontfläche (10) der Membran (11) des zweiten Ultraschallsensors (6) anliegend angeordnet ist.

3. Ultraschallsensoranordnung (2) nach Anspruch 2,
**dadurch gekennzeichnet, dass**
das Verstimmelement (9) mit der Frontfläche (10) der Membran (11) verklebt ist.

4. Ultraschallsensoranordnung (2) nach Anspruch 2 oder 3,
**dadurch gekennzeichnet, dass**
das Verstimmelement (9) aus Kunststoff gebildet ist.

5. Ultraschallsensoranordnung (2) nach einem der Ansprüche 2bis4,
**dadurch gekennzeichnet, dass**
das Verstimmelement (9) aus dem gleichen Material wie das Verkleidungsteil (3) gebildet ist.

6. Ultraschallsensoranordnung (2) nach einem der Ansprüche 2 bis 5,
**dadurch gekennzeichnet, dass**
das Verstimmelement (9) gleiche Dicke wie das Verkleidungsteil (3) in demjenigen Bereich aufweist, an welchem die Membran (11) des ersten Ultraschallsensors (5) anliegt.

7. Ultraschallsensoranordnung (2) nach einem der Ansprüche 2 bis 6,
**dadurch gekennzeichnet, dass**
die Ultraschallsensoranordnung (2) ein, insbesondere aus Keramik gebildetes, ringförmiges Versteifungselement (21) aufweist, welches um die topfförmige Membran (11) des zweiten Ultraschallsensors (6) herum angeordnet ist, wobei das Verstimmelement (9) sowohl an der Frontfläche (10) der Membran (11) des zweiten Ultraschallsensors (6) als auch an einer Stirnseite (22) des Versteifungselements (21) anliegend angeordnet ist.

8. Ultraschallsensoranordnung (2) nach einem der vorhergehenden Ansprüche,
**dadurch gekennzeichnet, dass**
die Verstimmmittel (7, 9) eine elektronische Steuereinrichtung (7) aufweisen, welche dazu ausgelegt ist, zum Verstimmen des zweiten Ultraschallsensors (6) selbigen Sensor (6) bei einer von seiner Resonanzfrequenz unterschiedlichen Anregungsfrequenz zu betreiben.

9. Ultraschallsensoranordnung (2) nach Anspruch 8,
**dadurch gekennzeichnet, dass**
die Steuereinrichtung (7) dazu ausgelegt ist, die Anregungsfrequenz auf einen Wert einzustellen, bei welchem die Frequenz der von dem zweiten Ultraschallsensor (6) ausgesendeten Ultraschallsignale gleich der Frequenz der von dem ersten Ultraschallsensor (5) ausgesendeten Ultraschallsignale ist.

10. Kraftfahrzeug (1) mit einer Ultraschallsensoranordnung (2) nach einem der vorhergehenden Ansprüche.

11. Verfahren zum Betreiben von zumindest zwei Ultraschallsensoren (5, 6) eines Kraftfahrzeugs (1), bei welchem ein erster Ultraschallsensor (5, 6) mit seiner Membran (11) an einer Rückseite eines Verkleidungsteils (3), insbesondere eines Stoßfängers, des Kraftfahrzeugs (1) angeordnet ist, sodass die Membran (11) des ersten Ultraschallsensors (5, 6) Ultraschallsignale durch das Verkleidungsteil (3) hindurch sendet und/oder empfängt, und der zweite Ultraschallsensor (5, 6) an einem Kühlergrill (4) des Kraftfahrzeugs (1) angeordnet ist,
**dadurch gekennzeichnet, dass**
mittels Verstimmmitteln der zweite Ultraschallsensor (5, 6) verstimmt wird und hierdurch sein Sende- und/oder Empfangsverhalten an das Sende- und/oder Empfangsverhalten des ersten Ultraschallsensors (5, 6) angepasst wird, wobei der erste und der zweite Ultraschallsensor (5, 6) Sensoren gleicher Bauweise mit in unverbautem Zustand gleichen Resonanzfrequenzen sind, und durch die Verstimmmittel (7, 9) eine Frequenz der von dem zweiten Ultraschallsensor (6) ausgesendeten Ultraschallsignale an die Frequenz der von dem ersten Ultraschallsensor (5) ausgesendeten Ultraschallsignale angepasst wird.

## Claims

1. An ultrasonic sensor arrangement (2) for a motor vehicle (1), comprising a trim element (3), in particular a bumper, comprising a radiator grill (4), and at least one first and one second ultrasonic sensor (5, 6) each comprising a membrane (11) for emitting and/or receiving ultrasonic signals, wherein the first ultrasonic sensor (5) is arranged with its membrane (11) on a back side of the trim element (3) so that the membrane (11) of the first ultrasonic sensor (5) is configured for emitting and/or receiving the ultrasonic signals through the trim element (3) and the second ultrasonic sensor (6) is arranged on the radiator grill (4),
**characterized by**
detuning means (7, 9) for detuning the second ultrasonic sensor (6) and hereby for adapting an emission and/or receiving behaviour of the second ultrasonic sensor (6) to the emission and/or receiving behaviour of the first ultrasonic sensor (5), wherein the first and the second ultrasonic sensors (5, 6) are sensors of the same design with same resonant frequencies in the unmounted state and by the detuning means (7, 9) a frequency of the ultrasonic signals emitted by the second ultrasonic sensor (6) is adapted to the frequency of the ultrasonic signals emitted by the first ultrasonic sensor (5).

2. The ultrasonic sensor arrangement (2) according to claim 1,
**characterized in that**
the detuning means (7, 9) comprise a disk-like detuning element (9), which for detuning the second ultrasonic sensor (5, 6) is arranged to contact a front surface (10) of the membrane (11) of the second ultrasonic sensor (6).

3. The ultrasonic sensor arrangement (2) according to claim 2,
**characterized in that**
the detuning element (9) is glued together with the front surface (10) of the membrane (11).

4. The ultrasonic sensor arrangement (2) according to claim 2 or 3,
**characterized in that**
the detuning element (9) is formed from plastic.

5. The ultrasonic sensor arrangement (2) according to any one of claims 2 to 4,
**characterized in that**
the detuning element (9) is formed from the same material as the trim element (3).

6. The ultrasonic sensor arrangement (2) according to any one of claims 2 to 5,
**characterized in that**
the detuning element (9) has the same thickness as the trim element (3) in the region with which the membrane (11) of the first ultrasonic sensor (5) is in contact.

7. The ultrasonic sensor arrangement (2) according to any one of claims 2 to 6,
**characterized in that**
the ultrasonic sensor arrangement (2) comprises a ring-shaped stiffening element (21), which is in particular formed from ceramic and which is arranged around the pot-shaped membrane (11) of the second ultrasonic sensor (6), wherein the detuning element (9) is arranged to contact both the front surface (10) of the membrane (11) of the second ultrasonic sensor (6) as well as a front side (22) of the stiffening element (21).

8. The ultrasonic sensor arrangement (2) according to any one of the preceding claims,
**characterized in that**
the detuning means (7, 9) comprise an electronic control device (7), which for detuning the second ultrasonic sensor (6) is configured to operate said sensor (6) at an excitation frequency that is different from its resonant frequency.

9. The ultrasonic sensor arrangement (2) according to claim 8,
**characterized in that**
the control device (7) is configured to set the excitation frequency to a value at which the frequency of the ultrasonic signals emitted by the second ultrasonic sensor (6) is equal to the frequency of the ultrasonic signals emitted by the first ultrasonic sensor (5).

10. A motor vehicle (1) comprising an ultrasonic sensor arrangement (2) according to any one of the preceding claims.

11. A method for operating at least two ultrasonic sensors (5, 6) of a motor vehicle (1), in which a first ultrasonic sensor (5, 6) is arranged with its membrane (11) on a back side of a trim element (3), in particular of a bumper, of the motor vehicle (1) so that the membrane (11) of the first ultrasonic sensor (5, 6) emits and/or receives ultrasonic signals through the trim element (3) and the second ultrasonic sensor (5, 6) is arranged on a radiator grill (4) of the motor vehicle (1),
**characterized in that**
by detuning means the second ultrasonic sensor (5, 6) is detuned and hereby its emission and/or receiving behaviour adapted to the emission and/or receiving behaviour of the first ultrasonic sensor (5, 6), wherein the first and the second ultrasonic sensors (5, 6) are sensors of the same design with same resonant frequencies in the unmounted state and by the detuning means (7, 9) a frequency of the ultrasonic signals emitted by the second ultrasonic sensor (6) is adapted to the frequency of the ultrasonic signals emitted by the first ultrasonic sensor (5).

## Revendications

1. Agencement de capteurs à ultrasons (2) pour un véhicule (1), avec une partie habillage (3), en particulier un pare-chocs, avec une grille de radiateur (4) et avec au moins un premier et un second capteur à ultrasons (5, 6), comprenant respectivement une membrane (11), destinée à émettre et / ou à recevoir des signaux ultrasonores, le premier capteur à ultrasons (5) étant agencé, avec sa membrane (11), sur une face arrière de la partie habillage (3), de sorte que la membrane (11) du premier capteur à ultrasons (5), destinée à envoyer et / ou à recevoir les signaux ultrasonores, est constituée au travers de la partie habillage (3) et le second capteur à ultrasons (6) est agencé contre la grille de radiateur (4),
**caractérisé par** des
des moyens de désaccord (7, 9), destinés à désaccorder le second capteur à ultrasons (6) et, par conséquent, à adapter un comportement à l'émission et / ou à la réception du second capteur à ultrasons (6) au comportement à l'émission et / ou à la réception du premier capteur à ultrasons (5), le premier et le second capteur à ultrasons (5, 6) étant des capteurs de même fabrication avec, à l'état non aménagé, des fréquences de résonance identiques et une fréquence des signaux ultrasonores, émis par le second capteur à ultrasons (6), étant adaptée à la fréquence des signaux ultrasonores, émis par le premier capteur à ultrasons (5), par le biais des moyens de désaccord (7, 9).

2. Agencement de capteurs à ultrasons (2) selon la revendication 1,
**caractérisé en ce que**
les moyens de désaccord (7, 9) présentent un élément de désaccord (9) analogue à une plaque, lequel est agencé adjacent à une surface frontale (10) de la membrane (11) du second capteur à ultrasons (6), pour désaccorder le second capteur à ultrasons (5, 6).

3. Agencement de capteurs à ultrasons (2) selon la revendication 2,
**caractérisé en ce que**
l'élément de désaccord (9) est collé à la surface frontale (10) de la membrane (11).

4. Agencement de capteurs à ultrasons (2) selon la revendication 2 ou 3,
**caractérisé en ce que**
l'élément de désaccord (9) est formé en matière plastique.

5. Agencement de capteurs à ultrasons (2) selon l'une des revendications 2 à 4,
**caractérisé en ce que**
l'élément de désaccord (9) est formé dans le même matériau que la partie habillage (3).

6. Agencement de capteurs à ultrasons (2) selon l'une des revendications 2 à 5,
**caractérisé en ce que**
l'élément de désaccord (9) présente la même épaisseur que la partie habillage (3) dans le secteur contre lequel s'appuie la membrane (11) du premier capteur à ultrasons (5).

7. Agencement de capteurs à ultrasons (2) selon l'une des revendications 2 à 6,
**caractérisé en ce que**
l'agencement de capteurs à ultrasons (2) présente un élément raidisseur annulaire (21), formé en particulier en céramique, lequel est agencé tout autour de la membrane en forme de pot (11) du second capteur à ultrasons (6), l'élément de désaccord (9) étant agencé adjacent tant à la surface frontale (10) de la membrane (11) du second capteur à ultrasons (6) qu'à une face frontale (22) de l'élément raidisseur (21).

8. Agencement de capteurs à ultrasons (2) selon l'une des revendications précédentes,
**caractérisé en ce que**
les moyens de désaccord (7, 9) présentent un dispositif de commande électronique (7), lequel est conçu, pour désaccorder le second capteur à ultrasons (6), pour exploiter le même capteur (6), en présence d'une fréquence d'excitation, différente de sa fréquence de résonance.

9. Agencement de capteurs à ultrasons (2) selon la revendication 8,
**caractérisé en ce que**
le dispositif de commande (7) est conçu, pour régler la fréquence d'excitation sur une valeur, pour laquelle la fréquence des signaux ultrasonores, émis par le second capteur à ultrasons (6), est identique à la fréquence des signaux ultrasonores, émis par le premier capteur à ultrasons (5).

10. Véhicule (1) avec un agencement de capteurs à ultrasons (2) selon l'une des revendications précédentes.

11. Procédé d'exploitation d'au moins deux capteurs à ultrasons (5, 6) d'un véhicule (1), pour lequel un premier capteur à ultrasons (5, 6) est agencé, avec sa membrane (11), sur une face arrière d'une partie habillage (3), en particulier d'un pare-chocs, du véhicule (1), de sorte que la membrane (11) du premier capteur à ultrasons (5, 6) émet et / ou reçoit des signaux ultrasonores à travers la partie habillage (3) et le second capteur à ultrasons (5, 6) est agencé contre une grille de radiateur (4) du véhicule (1),
**caractérisé en ce que**
le second capteur à ultrasons (5, 6) est désaccordé au moyen de moyens de désaccord et que, par conséquent, son comportement à l'émission et / ou à la réception est adapté au comportement à l'émission et / ou à la réception du premier capteur à ultrasons (5, 6), le premier et le second capteur à ultrasons (5, 6) étant des capteurs de même fabrication avec, à l'état non aménagé, les mêmes fréquences de résonance et une fréquence des signaux ultrasonores, émis par le second capteur à ultrasons (6), étant adaptée à la fréquence des signaux ultrasonores, émis par le premier capteur à ultrasons (5), par le biais des moyens de désaccord (7, 9).
